# EUROPEAN PATENT APPLICATION

(11) **EP 2 544 399 A2**
(43) Date of publication of application: **09.01.2013**
(21) Application number: 12169780.9
(22) Date of filing: 29.05.2012
(51) Int. Cl.: H04L 9/08

(54) **Identity-based encryption method and apparatus**

(30) Priority: 30.05.2011 KR 20110051669
(71) Applicant: Samsung SDS Co. Ltd., Seoul 135-918 (KR)
(72) Inventor: Yoon, Hyo Jin, 448-971 Gyeonggi-do (KR)
(74) Representative: Grünecker, Kinkeldey, Stockmair & Schwanhäusser

(57) **Abstract**

An identity-based encryption method and apparatus is provided. A terminal generates identification including version information and an EUI-64 address generated using a media access control (MAC) address, a 16-bit short address, or an address including a 16-bit short address and a prefix of a router to which the terminal belongs, transmits the identification to a key server, and then receives a private key using the identification as a public key.

## Description

### CROSS-REFERENCE TO RELATED PATENT APPLICATION

This application claims the benefit of Korean Patent Application No. 10-2011-0051669, field on May 30, 2011, in the Korean Intellectual Property Office, the disclosure of which is incorporated herein in its entirety by reference.

### BACKGROUND OF THE INVENTION

### 1. Field of the Invention

The present invention relates to an identity-based encryption method and apparatus, and more particularly, to an identity-based encryption method and apparatus using an address of a terminal as identification, and a communication method using the encryption method.

### 2. Description of the Related Art

As machine to machine (M2M) environments have become common, small-sized wireless terminals have geometrically increased in number, and thus, security issues of human-to-human communication, human-to-device, and device-to-device communication have become more serious. However, it is impossible to practically use a conventional public key cryptosystem due to issues of key management and certification server load, which have become more serious in proportion to the number of terminals that have geometrically increased. In particular, with regard to device-to-device communication that mainly occupies M2M, the burden of key management of small-sized terminals increases if a conventional private key based cryptosystem is used. In addition, it is impossible to practically use a public key cryptosystem due to issues of key management and server connection between devices during communication, which have become more serious due to the increased number of terminals when the public key cryptosystem is used.

### SUMMARY OF THE INVENTION

The present invention provides an identity-based encryption method and apparatus, for resolving issues of key management of terminals

According to an aspect of the present invention, there is provided an identity-based encryption method including generating identification including an address of a terminal; and receiving a private key using the identification as a public key from a key server.

According to another aspect of the present invention, there is provided an identity-based encryption method including receiving identification including an address of a terminal from the terminal; generating a private key using the identification as a public key; and transmitting the private key to the terminal.

According to another aspect of the present invention, there is provided a method of updating a key in an identity-based encryption method using identification including an address and version information of a terminal, the method including transmitting new identification including the address and new version information of the terminal, and previous version information, to a key server; receiving data including a new private key using the new identification as a new public key from the key server, wherein the data is encrypted using the previous identification including the previous version information; and decoding the data by using a previous private key corresponding to the previous identification to obtain the new private key.

According to another aspect of the present invention, there is provided a method of updating a key in an identity-based encryption method using identification including an address and version information of a terminal, the method including receiving new identification including the address and new version information of the terminal, and previous version information, from the terminal; generating a new private key using the new identification as a public key; encrypting the new private key by using the previous identification including the address of the terminal and the previous version information; and transmitting information about the encrypted new private key to the terminal.

According to another aspect of the present invention, there is provided a communication method in an identity-based encryption method using identification including an address and version information of a terminal, the communication method including generating a packet using the identity-based encryption method; and transmitting the packet to a receiving terminal, wherein the packet using the identity-based encryption method includes a receiver address field including an address of the receiving terminal; a code header field including version information and flag information indicating whether the identity-based encryption method is used; and a payload field including data that is encrypted using identification including the address of the receiving terminal and the version information.

According to another aspect of the present invention, there is provided a communication method in an identity-based encryption method using identification including an address and version information of a terminal, the communication method including generating data that is encrypted based identification including version information and an address of a receiving terminal, in a transmitting terminal; generating a packet including the version information and address of the receiving terminal and the encrypted data, in the transmitting terminal; and transmitting the packet to the receiving terminal, by the transmitting terminal.

According to another aspect of the present invention, there is provided a communication method in an identity-based encryption method using identification including an address and version information of a terminal, the communication method including generating a packet that is signed using the identity-based encryption method; and transmitting the packet to a receiving terminal, wherein the packet that is signed using the identity-based encryption method includes a transmitter address field including an address of a transmitting terminal; a code header field including version information and flag information indicating whether a signature using the identity-based encryption method is used; and a signature field for adding the signature, which is encrypted using identification including the address and version information of the transmitting terminal, to a payload field.

According to another aspect of the present invention, there is provided a communication method in an identity-based encryption method using identification including an address and version information of a terminal, the communication method including generating a signature by using a private key corresponding to identification of a transmitting terminal, in the transmitting terminal; generating a packet including the version information and address of the transmitting terminal and the signature, in the transmitting terminal; and transmitting the packet to a receiving terminal, in the transmitting terminal.

### BRIEF DESCRIPTION OF THE DRAWINGS

The above and other features and advantages of the present invention will become more apparent by describing in detail exemplary embodiments thereof with reference to the attached drawings in which:
FIG. 1 shows a terminal address that is used as identification in an identity-based encryption method, according to an embodiment of the present invention
FIG. 2 shows a method of setting a key in an identity-based encryption method according to an embodiment of the present invention;
FIG. 3 shows a method of updating a key in an identity-based encryption method according to an embodiment of the present invention;
FIG. 4 shows a packet using an identity-based encryption method according to an embodiment of the present invention;
FIG. 5 shows a communication method using an identity-based encryption method according to an embodiment of the present invention; and
FIG. 6 shows a signature method using an identity-based encryption method according to an embodiment of the present invention.

### DETAILED DESCRIPTION OF THE INVENTION

Hereinafter, an identity-based encryption method and apparatus will be described with regard to exemplary embodiments of the invention with reference to the attached drawings.

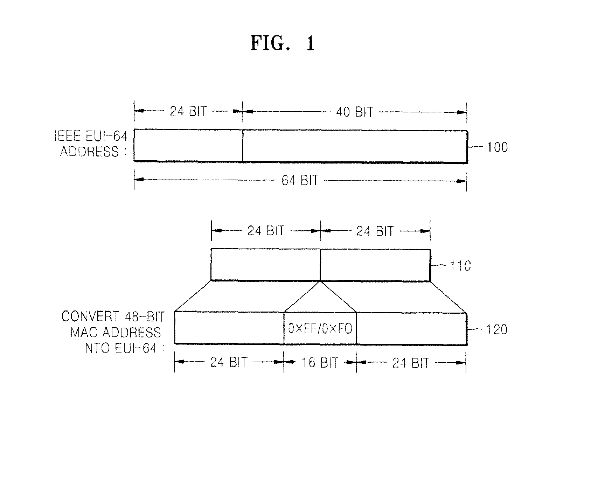

FIG. 1 shows a terminal address that is used as identification in an identity-based encryption method, according to an embodiment of the present invention.

In general, an Internet Protocol version 6 (IPv6) address includes 128 bits which consist of upper 64 bits corresponding to a prefix of a router and lower 64 bits corresponding to an interface identifier. When a terminal moves to a new router, upper 64 bits corresponding to the prefix of the router are changed. However, since lower Extended Unique Identifier (EUI)-64 bits are not changed when a terminal moves to the new router, when EUI-64 is used as identification of the encryption method according to the present embodiment, mobility may be supported.

Referring to FIG. 1, a EUI-64 type long address may include an Institute of Electrical and Electronics Engineers (IEEE) EUI-64 address 100 that is a unique address value, or may include a 48-bit media access control (MAC) address 110 of IEEE 802. A MAC address 110 includes a 3-bit institution separator and a 3-bit device separator. In this regard, a manufacturer requests the IEEE to assign manufacturer identification, receives the assigned manufacturer identification, and assigns the manufacturer identification and device identification to a product to complete the product. Thus, MAC addresses that are unique around the world are assigned to all devices, respectively. In addition, similarly, the EUI-64 addresses 100 may be generated as MAC addresses that are unique around the world via 3-bit manufacturer identification and 5-bit device identification.

However, when the EUI-64 type long address includes the 48-bit MAC address 110 of IEEE 802, the 48-bit MAC address 110 is extended to the EUI-64 address 120 by inserting 16-bit dummy bit between upper 3 bits and lower 3 bits of the 48-bit MAC address 110 according to the IEEE standard in order to correspond to a description method of EUI-64.

In addition, IEEE 802.15.4, which is a base protocol of IPv6 over Low power Wireless Personal Area Networks (6LoWPAN), supports both the EUI-64 type long address and 16-bit short address due to restrictions on a packet size. In the 6LoWPAN standard, a communication method using a 16-bit short address is defined. The communication method will now be described briefly. A terminal registers a MAC address thereof with a router to which the terminal belongs, randomly selects a 16-bit short address, and requests the router to which the terminal belongs to check whether the 16-bit short address is duplicated in the personal area network (PAN), in a neighbor discovery process. If a collision occurs (that is, if it is determined that the 16-bit short address is duplicated), the terminal randomly selects a new 16-bit short address and again requests the router to which the terminal belongs to check whether the 16-bit short address is duplicated in the same PAN. If a collision does not occur (that is, if it is determined that the 16-bit short address is not duplicated), the corresponding short address is registered. With regard to a short address that does not collide (that is not duplicated) in the same PAN, a 128-bit IPv6 address obtained by combining a prefix of a border router and a 64-bit interface identifier (IID) set from the short address may be used as an address that is unique around the world. However, in this case, if the 16-bit short address is not combined with the prefix, the 16-bit short address is not a unique address. Thus, when a terminal moves to a new PAN region, an existing 16-bit short address of the terminal may collide with that of another terminal in a new PAN, and in this case, a new 16-bit short address needs to be selected.

In order to increase the reusability of a 16-bit short address, a 16-bit output value of a collision free pseudo random hash function using, as an input, a MAC address or EUI-64 address of a terminal, version information, and an index may be used as a short address. The version information will be described below. The index is a value that is changed in order to prevent a case where a 16-bit output value of the collision free pseudo random hash function collides in the same PAN. That is, when a 16-bit output value collides, a new 16-bit output value of the collision free pseudo random hash function is obtained by increasing the index by 1.

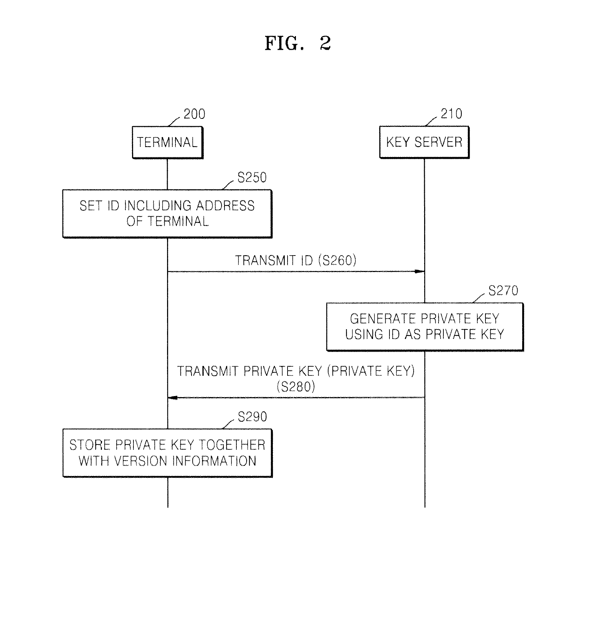

FIG. 2 shows a method of setting a key in an identity-based encryption method according to an embodiment of the present invention.

Referring to FIG. 2, a terminal 200 sets identification including an address of the terminal 200 (S250). The address included in the identification may be, for example, an EUI-64 address, an address obtained by combining a 16-bit short address and a prefix of a router to which the terminal 200 belongs, or a 16-bit short address obtained from a collision free pseudo random hash function, as described with reference to FIG. 1.

The terminal 200 transmits the identification to a key server 210 (S260) and the key server 210 generates a private key using the identification as a public key (S270). The key server 210 may generate the private key by using a method of calculating a discrete logarithm provided from a discrete logarithm group. The key server 210 provides the generated private key to the terminal 200 through a private channel (on line/off line) (S280).

The terminal 200 stores the received private key together with version information (S290). The version information may have a type of date information about a year and month or a type that is defined by a user and may be capable of being updated.

According to the present embodiment, it is assumed that an address of a terminal is included in the identification. Alternatively, a value obtained by combining the address of the terminal and version information may be used as identification. In this case, when a production rule about version information, which is previously committed between the terminal and a key server, is used, for example, when date information is used as version information, the version information does not have to be included in the identification and does not have to be transmitted.

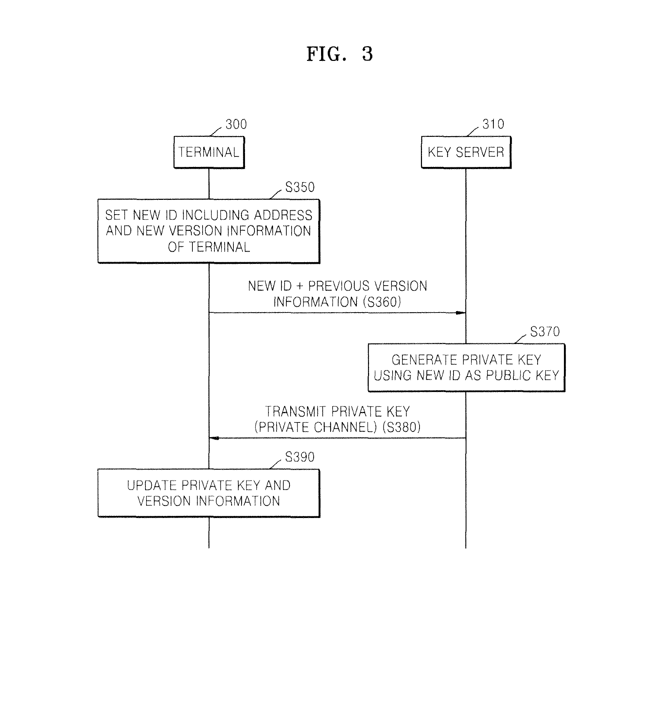

FIG. 3 shows a method of updating a key in an identity-based encryption method according to an embodiment of the present invention.

In FIG. 3, it is assumed that a terminal 300 previously stores a private key corresponding to a public key using, as identification, an address of the terminal and version information. This process may be performed via the key setting method described with reference to FIG. 2.

Referring to FIG. 3, the terminal 300 sets new identification including an address and new version information of the terminal 300 (S350). The terminal 300 transmits the new identification and previous version information to a key server 310 (S360). The key server 310 generates a new private key using the new identification as a public key (S370). In addition, the key server 310 transmits the new private key to the terminal 300 through a private channel (S380). The terminal 300 updates a previous private key to the received new private key and also updates version information to new version information (S380).

In this case, as a method of transmitting a private key through a private channel, the key server 310 may transmit to the terminal 300 data obtained by encrypting a new private key by using previous identification (that is, a previous public key). When the terminal 300 receives the data obtained by encrypting the new private key by using the previous identification, the terminal 300 may decode data by using a private key corresponding to the previous identification and obtain a new private key included in data.

In the key updating method of FIG. 3, when a period of time taken to update a key is a predetermined period or the number of times a key is used reaches a predetermined number of times, the terminal 300 or the key server 310 may request to update a key.

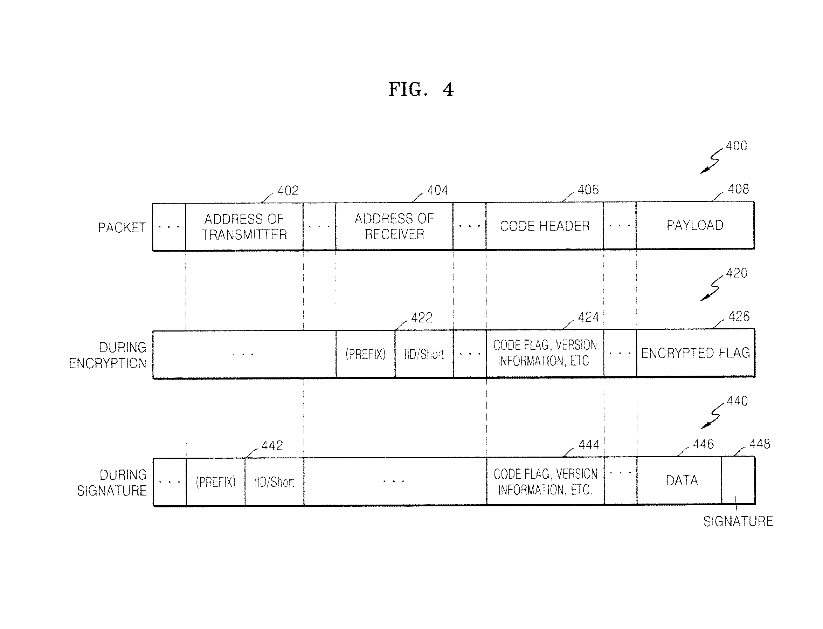

FIG. 4 shows a packet 400 using an identity-based encryption method according to an embodiment of the present invention.

Referring to FIG. 4, the packet 400 using the identity-based encryption method according to the present embodiment includes a transmitter address field 402, a receiver address field 404, a code header field 406, a payload 408, and the like. The transmitter address field 402 and the receiver address field 404 store an address of a transmitter and an address of a receiver, respectively. The code header field 406 includes flag information indicating that the identity-based encryption method is used for the packet 400, version information included in the identification (that is, a public key), index information that is used when a 16-bit short address is generated via a collision free pseudo random hash function described with reference to FIG. 1, or the like. The payload 408 includes encrypted data or signature, or the like.

In more detail, a packet 420 transmitting encrypted data includes a receiver address field 422 including an address of a receiver, used as a public key, a code header field 424 including flag information indicating encryption, version information included in the identification, and the like, and a payload 426 including encrypted data. An address of a receiver may be, for example, an EUI-64 address, a 16-bit short address, or an address obtained by combining a 16-bit short address and a prefix of a router to which a terminal belongs, as described with reference to FIG. 1.

During packet signaturing, a packet 440 includes a transmitter address field 442 including an address of a transmitter, which is used as a public key, a code header field 444 including flag information indicating signature, version information included in the identification, and the like, and a payload 446 including a signature 448 that is encrypted using a private key corresponding to identification of a transmitter side.

As such, a packet using the identity-based encryption method according to the present embodiment uses addresses of a transmitter and a receiver as a public key, separate public key information does not have to be added to the packet.

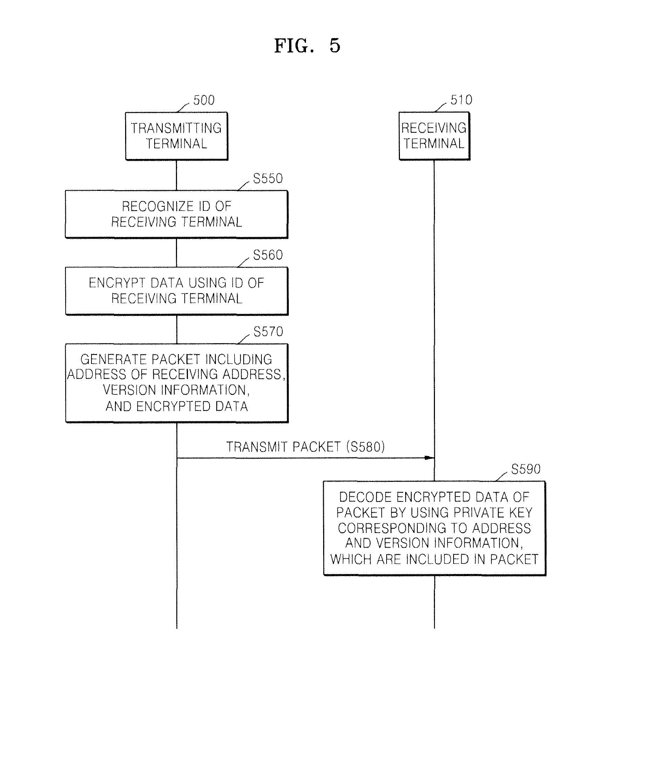

FIG. 5 shows a communication method using an identity-based encryption method according to an embodiment of the present invention.

Referring to FIG. 5, a transmitting terminal 500 recognizes identification of a receiving terminal 510 (S550). With regard to all terminals, since a terminal registers an EUI-64 address thereof with a border router to which the terminal belongs in a neighbor discovery process, the transmitting terminal 500 may request the router thereof to obtain an EUI-64 address of the receiving terminal 510 from a router to which the receiving terminal 510 belongs. With regard to version information of the receiving terminal 510, the version information may be recognized from the receiving terminal 510 or a periodic advertising message of a router to which the receiving terminal 510 belongs. In addition, when the version information is date information about a year and month or time information, the transmitting terminal 500 itself may generate the version information.

The transmitting terminal 500 encrypts data by using the obtained address and version information of the receiving terminal 510 (S560), installs the encrypted data in a payload, and generates a packet including the address and version information of the receiving terminal 510, as shown in FIG. 4 (S570). The transmitting terminal 500 transmits the packet to the receiving terminal 510 (S580).

When the receiving terminal 510 receives the packet, the receiving terminal 510 recognizes identification, that is, a public key, via the address and version information of the receiving terminal 510 from the packet and decodes data by using a private key corresponding to the public key (S590). If the version information of the received packet is different from version information contained in the receiving terminal 510, the receiving terminal 510 may request the transmitting terminal 500 to transmit a packet having new version information.

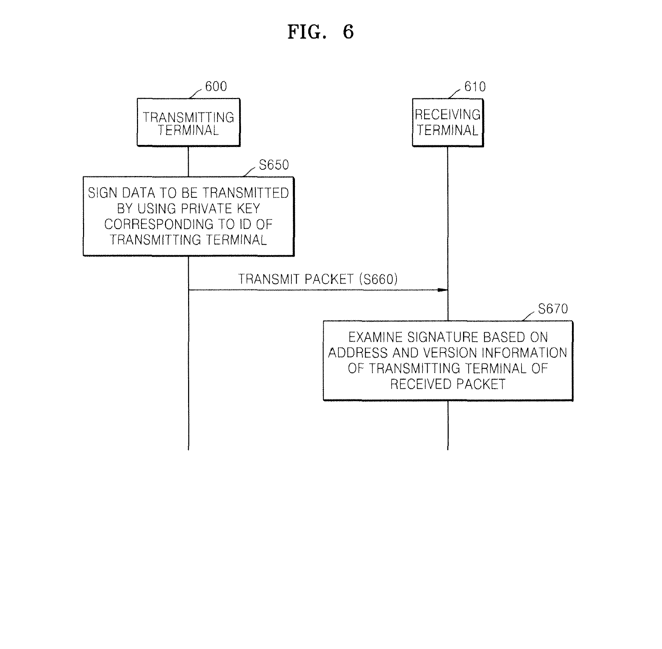

FIG. 6 shows a signature method using an identity-based encryption method according to an embodiment of the present invention.

Referring to FIG. 6, a transmitting terminal 600 adds a signature to data by using a private key corresponding to identification of the transmitting terminal 600 (S650) and transmits a signed packet to a receiving terminal 610 (S660). The receiving terminal 610 obtains identification (that is, a public key) of a transmitter by using the address and version information of the transmitting terminal 600, which are contained in the packet, and examines whether the signature is legitimate by using the identification (S670).

Referring back to FIG. 1, a 16-bit short address is generated using a collision free pseudo random hash function. In this case, since the number of terminals belonging to a single PAN region is remarkably smaller than 2¹⁶ due to communication quality or the like and a used hash function has pseudo random properties, the probability of reusability of the 16-bit short address is relatively high. Identification may be generated by adding version information to the generated 16-bit short address and a private key corresponding to the identification is generated by applying a self proxy signature or the private key may be issued from a key server.

A router does not transmit a packet for generating a private key about an duplicated address so as to prevent from maliciously storing a private key via complete enumeration of addresses. In addition, version information is used as an input for generating a short address so as to guarantee cryptographic security.

A router may receive a private key corresponding to a prefix of the router, which is issued by a key server, from the key server in order to sign a packet that is transmitted out of a PAN region to which the router belongs. In this case, when a transmitting terminal uses a 16-bit short address and performs an identity-based signature method by using identification obtained from the 16-bit short address, index information used to generate the 16-bit short address is added to a code header of a packet. A transmitter address field includes a 16-bit short address. However, since 1-hop neighbors know MAC addresses in a MAC layer in order to communicate with each other, the 1-hop neighbors know an EUI-64 address of a transmitting terminal. Thus, the 1-hop neighbors of the transmitting terminal may check whether a short address is legitimate by using the EUI-64 address and version information of the transmitting terminal and an index. When the short address is legitimate, the 1-hop neighbors may transmit the short address to another terminal.

When a packet transmitted out of a PAN region and an address obtained by attaching a prefix to an IID of which a short address is extended are used, a router resigns a packet by using a private key that is previously issued and corresponds to a prefix of a PAN region and then transmits the packet. Then, a receiving terminal examines whether the added signature is legitimate by using the prefix of the transmitted packet and examines the signature of the transmitting terminal by using a short address, version information, and the like.

According to the one or more embodiments of the present invention, issues of key management of a conventional cryptosystem may be basically resolved. In addition, problems of a conventional identity-based encryption method may be resolved by supporting mobility that is the basic property of machine to machine (M2M) environments. In addition, when 6LoWPAN is used, public key information may be obtained by using an IP address that is previously included in a 6LoWPAN packet without attaching public key information to a packet. In this case, conventionally, the public information needs to be additionally installed in a packet for encryption/decryption and signature/authentication in a conventional cryptosystem. Thus, 6LoWPAN having a serious restriction in terms of bandwidth may effectively perform encrypted communication.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An identity-based encryption method comprising:
generating identification comprising an address of a terminal; and
receiving a private key using the identification as a public key from a key server.

2. An identity-based encryption method comprising:
receiving identification comprising an address of a terminal from the terminal;
generating a private key using the identification as a public key; and
transmitting the private key to the terminal.

3. The identity-based encryption method of claim 1 or claim 2, wherein the address of the terminal comprises an EUI-64 address that is generated by using a media access control (MAC) address of the terminal, a 16-bit short address, or an address comprising a 16-bit short address and a prefix of a router to which the terminal belongs.

4. The identity-based encryption method of claim 3, wherein the 16-bit short address comprises a 16-bit output value of a collision free pseudo random hash function using, as an input, the MAC address or the EUI-64 address of the terminal, version information, and an index, and
wherein the index is a value that is changed in order to prevent a case where a 16-bit output value of the collision free pseudo random hash function collides with a 16-bit short address of another terminal.

5. The identity-based encryption method of claim 1 or claim 2, wherein the identification comprises version information that is updated according to a date type or a predetermined type, which is stored together with the address of the terminal.

6. A method of updating a key in an identity-based encryption method using identification comprising an address and version information of a terminal, the method comprising:
transmitting new identification comprising the address and new version information of the terminal, and previous version information, to a key server;
receiving data comprising a new private key using the new identification as a new public key from the key server, wherein the data is encrypted using the previous identification comprising the previous version information; and
decoding the data by using a previous private key corresponding to the previous identification to obtain the new private key.

7. A method of updating a key in an identity-based encryption method using identification comprising an address and version information of a terminal, the method comprising:
receiving new identification comprising the address and new version information of the terminal, and previous version information, from the terminal;
generating a new private key using the new identification as a public key;
encrypting the new private key by using the previous identification comprising the address of the terminal and the previous version information; and
transmitting information about the encrypted new private key to the terminal.

8. The method of claim 6, wherein the transmitting of the new identification comprises:
when a period of time taken to update a key is a predetermined period or the number of times a key is used reaches a predetermined critical value, transmitting the new identification to the key server.

9. The method of claim 6 or claim 7, wherein the address of the terminal comprises an EUI-64 address that is generated by using a MAC address of the terminal, a 16-bit short address, or an address comprising a 16-bit short address and a prefix of a router to which the terminal belongs.

10. A communication method in an identity-based encryption method using identification comprising an address and version information of a terminal, the communication method comprising:
generating a packet using the identity-based encryption method; and
transmitting the packet to a receiving terminal,
wherein the packet using the identity-based encryption method comprises:
a receiver address field comprising an address of the receiving terminal;
a code header field comprising version information and flag information indicating whether the identity-based encryption method is used; and
a payload field comprising data that is encrypted using identification comprising the address of the receiving terminal and the version information.

11. The communication method of claim 10, wherein the receiver address field comprises an EUI-64 address of the receiving terminal, a 16-bit short address, or an address comprising a 16-bit short address and a prefix of a router to which the receiving terminal belongs.

12. The communication method of claim 10, wherein the receiver address field comprises, as the address of the receiving terminal, a 16-bit output value of a collision free pseudo random hash function using, as an input, a MAC address or EUI-64 address of the terminal, version information, and an index.

13. A communication method in an identity-based encryption method using identification comprising an address and version information of a terminal, the communication method comprising:
generating data that is encrypted based identification comprising version information and an address of a receiving terminal, in a transmitting terminal;
generating a packet comprising the version information and address of the receiving terminal and the encrypted data, in the transmitting terminal; and
transmitting the packet to the receiving terminal, by the transmitting terminal.

14. The communication method of claim 13, wherein the transmitting terminal recognizes the version information from the receiving terminal or a periodic advertising message of a router to which the receiving terminal belongs, or the transmitting terminal itself generates the version information having a date type.

15. The communication method of claim 13, further comprising:
receiving the packet from the transmitting terminal, in a receiving terminal;
and
recognizing a corresponding private key that is previously stored, based on the address and version information of the receiving terminal, which are included in the packet, and decoding the encrypted data of the packet by using the private key, in the receiving terminal.

16. A communication method in an identity-based encryption method using identification comprising an address and version information of a terminal, the communication method comprising:
generating a packet that is signed using the identity-based encryption method; and
transmitting the packet to a receiving terminal,
wherein the packet that is signed using the identity-based encryption method comprises:
a transmitter address field comprising an address of a transmitting terminal;
a code header field comprising version information and flag information indicating whether a signature using the identity-based encryption method is used; and
a signature field for adding the signature, which is encrypted using identification comprising the address and version information of the transmitting terminal, to a payload field.

17. The communication method of claim 16, wherein the transmitter address field comprises an EUI-64 address of the transmitting terminal, a 16-bit short address, or an address comprising a 16-bit short address and a prefix of a router to which the transmitting terminal belongs.

18. The communication method of claim 17, wherein the transmitter address field comprises, as the address of the transmitting terminal, a 16-bit output value of a collision free pseudo random hash function using, as an input, a MAC address or EUI-64 address of the terminal, version information, and an index.

19. A communication method in an identity-based encryption method using identification comprising an address and version information of a terminal, the communication method comprising:
generating a signature by using a private key corresponding to identification of a transmitting terminal, in the transmitting terminal;
generating a packet comprising the version information and address of the transmitting terminal and the signature, in the transmitting terminal; and
transmitting the packet to a receiving terminal, in the transmitting terminal.

20. The communication method of claim 19, wherein the receiving terminal comprises:
receiving the packet from the transmitting terminal; and
examining the signature stored in the packet based on the version information and address of the transmitting terminal, which are included in the packet.

21. A computer readable recording medium having recorded thereon a program for executing the method of claim 1.
